(19) Europäisches Patentamt
European Patent Office
Office européen des brevets

(11) EP 4 077 419 B1

(12) FASCICULE DE BREVET EUROPEEN

(45) Date de publication et mention de la délivrance du brevet:
**20.08.2025 Bulletin 2025/34**

(21) Numéro de dépôt: **20845194.8**

(22) Date de dépôt: **14.12.2020**

(51) Classification Internationale des Brevets (IPC):
***C08F 210/02*** (2006.01) ***C08F 236/06*** (2006.01)
***C08F 297/06*** (2006.01) ***C08F 4/52*** (2006.01)

(52) Classification Coopérative des Brevets (CPC):
(C-Sets disponibles)
**C08F 210/02; C08F 236/06; C08F 297/06** (Cont.)

(86) Numéro de dépôt international:
**PCT/FR2020/052427**

(87) Numéro de publication internationale:
**WO 2021/123590 (24.06.2021 Gazette 2021/25)**

# (54) COMPOSE DIORGANOMAGNESIEN POUR SYSTEME CATALYTIQUE

DIORGANOMAGNESIUMVERBINDUNG FÜR EIN KATALYTISCHES SYSTEM

DIORGANOMAGNESIUM COMPOUND FOR CATALYTIC SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2019 FR 1914625**

(43) Date de publication de la demande:
**26.10.2022 Bulletin 2022/43**

(73) Titulaire: **COMPAGNIE GENERALE DES ETABLISSEMENTS MICHELIN
63000 Clermont-Ferrand (FR)**

(72) Inventeurs:
- **THUILLIEZ, Julien
63040 CLERMONT-FERRAND Cedex 9 (FR)**
- **NGO, Robert
63040 CLERMONT-FERRAND Cedex 9 (FR)**
- **JEAN-BAPTISTE-DIT-DOMINIQUE, François
63040 CLERMONT-FERRAND Cedex 9 (FR)**

(74) Mandataire: **M.F.P. Michelin
DCJ/PI - F35 - Ladoux
23 place des Carmes-Déchaux
63040 Clermont-Ferrand Cedex 9 (FR)**

(56) Documents cités:
**EP-A1- 2 484 685 DE-A1- 1 645 489
US-A- 3 554 998**

- **FRIEDRICH KREYENSCHMIDT ET AL: "Low-Valent Ate Complexes Formed in Cobalt-Catalyzed Cross-Coupling Reactions with 1,3-Dienes as Additives", CHEMISTRY - A EUROPEAN JOURNAL, vol. 24, no. 5, 19 December 2017 (2017-12-19), DE, pages 1168 - 1177, XP055719095, ISSN: 0947-6539, DOI: 10.1002/chem.201704547**

Il est rappelé que: Dans un délai de neuf mois à compter de la publication de la mention de la délivrance du brevet européen au Bulletin européen des brevets, toute personne peut faire opposition à ce brevet auprès de l’Office européen des brevets, conformément au règlement d’exécution. L’opposition n’est réputée formée qu’après le paiement de la taxe d’opposition. (Art. 99(1) Convention sur le brevet européen).

(52) Classification Coopérative des Brevets (CPC):
(Cont.)

C-Sets
**C08F 210/02, C08F 4/52;**
C08F 210/02, C08F 236/06, C08F 2500/27

## Description

Le domaine de la présente invention est celui des composés organomagnésiens ainsi que celui des systèmes catalytiques qui comprennent des organomagnésiens utilisés à titre de co-catalyseurs et qui sont destinés à être utilisés dans la préparation de polyoléfines, en particulier de copolymères d'oléfine et de diène conjugué.

Des systèmes catalytiques à base de métallocènes de terre rare sont décrits par exemple dans les demandes de brevet EP 1 092 731, WO 2004035639, WO 2007054224 et WO 2018224776. Ils permettent la synthèse de polyoléfines, en particulier de copolymères d'oléfines et de 1,3-diènes. Ils sont également utilisés dans la préparation de copolymères d'éthylène et de 1,3-butadiène fonctionnel, comme le décrit le document WO 2018224776. Dans ces systèmes catalytiques, le métallocène est activé par un co-catalyseur qui fait partie du système catalytique. A titre de co-catalyseur conviennent notamment les organomagnésiens, les organoaluminiques et les organolithiens. Lorsque le co-catalyseur est un organomagnésien, il est typiquement un chlorure d'un organomagnésien ou un diorganomagnésien dans lesquels l'atome de magnésium est lié à deux groupes aliphatiques, comme le dibutylmagnésium, le butyléthymagnésium et le butyloctylmagnésium.

La synthèse de polymères blocs comprenant un bloc homopolymère d'un 1,3-diène et un bloc copolymère d'éthylène et de 1,3-diène est également décrite dans le document WO 2019077232. Le procédé mis en œuvre dans la synthèse des polymères blocs est la réaction d'un homopolymère vivant obtenu par polymérisation anionique d'un 1,3-diène et d'un métallocène de terre rare, suivie de la polymérisation subséquente d'un mélange d'éthylène et d'un 1,3-diène.

Les métallocènes de terre rare utilisés en polymérisation catalytiques sont généralement caractérisés à travers leurs activités catalytiques exprimées en Kg de polymère par mol de catalyseur par heure ou leurs productivités exprimées en gramme de polymère par gramme de catalyseur.

La Demanderesse a découvert un nouveau composé diorganomagnésien asymétrique qui présente une première liaison magnésium-carbone, lequel carbone est un atome de carbone constitutif d'un noyau benzénique spécifique, et une deuxième liaison magnésium-carbone, lequel carbone est un atome de carbone constitutif d'une chaîne polymère. Dans la synthèse de polymère bloc comprenant un bloc homopolymère d'un 1,3-diène et un bloc copolymère d'éthylène et de 1,3-diène, l'utilisation de ce nouveau composé diorganomagnésien asymétrique comme co-catalyseur d'un système catalytique à base d'un métallocène de terre rare permet d'améliorer l'activité catalytique et la productivité.

Ainsi un premier objet de l'invention est un composé diorganomagnésien asymétrique de formule (I)

$$R^B\text{-Mg-}R^A \qquad (I)$$

$R^A$ étant différent de $R^B$,
$R^A$ étant une chaîne polymère contenant des unités d'un premier monomère choisi dans le groupe des monomères constitué par les 1,3-diènes, les $\alpha$-monoléfines aromatiques et leurs mélanges,
$R^B$ comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle, à la condition que si l'un des 2 atomes de carbone en ortho est substitué par un isopropyle, le deuxième atome de carbone en ortho n'est pas substitué par un isopropyle.

Un deuxième objet de l'invention est un système catalytique à base au moins d'un métallocène de formule (IIIa) ou (IIIb) et d'un composé diorganomagnésien conforme à l'invention à titre de co-catalyseur,

$$\{P(Cp^1)(Cp^2)Y\} \qquad (IIIa)$$

$$Cp^3Cp^4Y \qquad (IIIb)$$

Y désignant un groupe comportant un atome de métal qui est une terre rare,
$Cp^1$, $Cp^2$, $Cp^3$ et $Cp^4$, identiques ou différents, étant choisis dans le groupe constitué par les groupes fluorényles, les groupes cyclopentadiényles et les groupes indényles, les groupes étant substitués ou non substitués,
P étant un groupe pontant les deux groupes $Cp^1$ et $Cp^2$, et comprenant un atome de silicium ou de carbone.

L'invention concerne aussi un procédé de préparation d'un polymère qui comprend une étape de polymérisation d'un deuxième monomère choisi dans le groupe des monomères constitués par les diènes conjugués, l'éthylène, les $\alpha$-monooléfines et leurs mélanges en présence d'un système catalytique conforme à l'invention. Le polymère obtenu par le

procédé conforme à l'invention est un polymère bloc.

L'invention concerne également un procédé de préparation d'un composé diorganomagnésien asymétrique conforme à l'invention qui comprend :

la mise en contact d'un polymère anionique vivant de formule $R^ALi$ avec un halogénure d'un organomagnésien de formule $R^B$-Mg-X,
la réaction du polymère anionique vivant et de l'halogénure,
$R^A$ étant une chaîne polymère contenant des unités d'un premier monomère choisi dans le groupe des monomères constitué par les 1,3-diènes, les $\alpha$-monoléfines aromatiques et leurs mélanges,
$R^B$ comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle, à la condition que si l'un des 2 atomes de carbone en ortho est substitué par un isopropyle, le deuxième atome de carbone en ortho n'est pas substitué par un isopropyle,
X étant un halogène choisi dans le groupe constitué par le chlore, le fluor, le brome et l'iode.

## Description détaillée de l'invention

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

L'abréviation "pce" signifie parties en poids pour cent parties d'élastomère (du total des élastomères si plusieurs élastomères sont présents).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse.

Par l'expression « à base de » utilisée pour définir les constituants du système catalytique, on entend le mélange de ces constituants, ou le produit de la réaction d'une partie ou de la totalité de ces constituants entre eux.

Le composé conforme à l'invention de formule (I) a pour caractéristique essentielle d'être un composé diorganomagnésien, dit asymétrique et dans la présente invention dénommé composé diorganomagnésien asymétrique, puisque les deux groupes représentés par les symboles $R^B$ et $R^A$ sont différents l'un de l'autre.

$$R^B\text{-Mg-}R^A \qquad (I)$$

Le groupe représenté par le symbole $R^A$ est une chaîne polymère contenant des unités d'un premier monomère choisi dans le groupe des monomères constitué par les 1,3-diènes, les $\alpha$-monoléfines aromatiques et leurs mélanges. Le 1,3-diène en tant que premier monomère est préférentiellement le 1,3-butadiène, l'isoprène ou leur mélange. L'$\alpha$-monoléfine aromatique en tant que premier monomère est une $\alpha$-monoléfine de formule $CH_2$=CH-Ar, Ar représentant un groupe aromatique, substitué ou non. Le groupe Ar est de préférence phényle ou aryle. L'$\alpha$-monoléfine aromatique en tant que premier monomère est préférentiellement le styrène ou un styrène substitué par un ou plusieurs groupes alkyles, plus préférentiellement le styrène. De préférence, $R^A$ représente une chaîne homopolymère de 1,3-butadiène, d'isoprène ou de styrène ou une chaîne copolymère de monomères choisis parmi le 1,3-butadiène, l'isoprène et le styrène.

Le groupe représenté par le symbole $R^B$ a pour caractéristique essentielle de comprendre un noyau benzénique substitué par l'atome de magnésium. Les deux atomes de carbone du noyau benzénique en ortho du magnésium portent un substituant, identique ou différent. Alternativement l'un des deux atomes de carbone du noyau benzénique en ortho du magnésium peut porter un substituant, l'autre atome de carbone du noyau benzénique en ortho du magnésium peut former un cycle. Le substituant est un méthyle, un éthyle ou un isopropyle. Dans le cas où l'un des 2 atomes de carbone du noyau benzénique en ortho du magnésium est substitué par un isopropyle, le deuxième atome de carbone du noyau benzénique en ortho du magnésium n'est pas substitué par un isopropyle. De préférence, les atomes de carbone du noyau benzénique en ortho du magnésium sont substitués par un méthyle ou un éthyle. De manière plus préférentielle, les atomes de carbone du noyau benzénique en ortho du magnésium sont substitués par un méthyle.

Selon un mode de réalisation préférentiel, le composé diorganomagnésien asymétrique répond à la formule (II) dans laquelle $R^A$ est une chaîne polymère telle que définie précédemment, $R_1$ et $R_5$, identiques ou différents, représentent un méthyle ou un éthyle et $R_2$, $R_3$ et $R_4$, identiques ou différents, représentent un atome d'hydrogène ou un alkyle. De préférence, $R_1$ et $R_5$ représentent un méthyle. De préférence, $R_2$ et $R_4$ représentent un atome hydrogène.

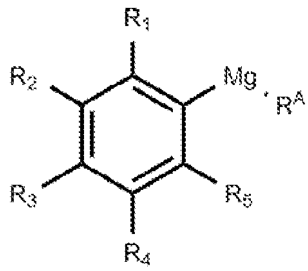

(II)

Selon une variante préférentielle, $R_1$, $R_3$ et $R_5$ sont identiques. Selon une variante plus préférentielle, $R_2$ et $R_4$ représentent un hydrogène et $R_1$, $R_3$ et $R_5$ sont identiques. Dans une variante davantage préférentielle, $R_2$ et $R_4$ représentent un hydrogène et $R_1$, $R_3$ et $R_5$ représentent un méthyle.

Selon un mode de réalisation préférentiel, la chaîne polymère représentée par le symbole $R^A$ est préparée par polymérisation anionique.

Le composé diorganomagnésien asymétrique conforme à l'invention peut être préparé par un procédé, autre objet de l'invention, lequel procédé comprend les étapes suivantes :

- la mise en contact d'un polymère anionique vivant $R^ALi$ avec un halogénure d'un organomagnésien de formule $R^B$-Mg-X,
- la réaction du polymère anionique vivant et de l'halogénure,

X étant un halogène choisi dans le groupe constitué par le chlore, le fluor, le brome et l'iode, $R^B$ et $R^A$ étant tels que définis précédemment.

X est préférentiellement un atome de brome ou un atome de chlore. X est plus préférentiellement un atome de brome.

Le polymère anionique vivant utile à la synthèse de composé organométallique de formule $R^ALi$ est typiquement une chaîne polymère portant un carbanion. Il résulte généralement des réactions d'amorçage et de propagation d'une chaîne polymère dans la polymérisation anionique du premier monomère. Les 1,3-diènes, les $\alpha$-monoléfines aromatiques et leurs mélanges qui peuvent être utilisés comme premier monomère sont bien connus pour polymériser ou copolymériser ensemble par voie anionique et pour former des chaînes polymères ou copolymères vivantes. Les procédés de polymérisation de ces monomères sont aussi bien connus et largement décrits.

Le polymère anionique vivant est donc obtenu de façon conventionnelle par polymérisation anionique du premier monomère dans un solvant, dit solvant de polymérisation. Le solvant de polymérisation peut être tout solvant hydrocarboné connu pour être utilisé dans la polymérisation de monomères 1,3-diènes et $\alpha$-monoléfines aromatiques. Le solvant de polymérisation est préférentiellement un solvant hydrocarboné, mieux aliphatique tel que l'hexane, le cyclohexane ou le méthylcyclohexane.

Le solvant de polymérisation du premier monomère peut comprendre un additif pour contrôler la microstructure de la chaîne polymère et la vitesse de la réaction de polymérisation. Cet additif peut être un agent polaire tel qu'un éther ou une amine tertiaire. L'additif est le plus souvent utilisé en faible quantité, notamment pour limiter les réactions de désactivation des sites propageants de la polymérisation anionique. La quantité d'additif dans le solvant de polymérisation, traditionnellement indexée sur le nombre de liaison carbone-métal dans le milieu de polymérisation, est réglée selon la microstructure souhaitée de la chaîne polymère et dépend donc du pouvoir complexant de l'additif.

Le ratio entre la quantité de solvant et la quantité de premier monomère utile à la formation du polymère vivant est choisi par l'homme du métier selon la viscosité souhaitée de la solution de polymère vivant. Cette viscosité dépend non seulement de la concentration de la solution polymère, mais aussi de nombreux autres facteurs comme la longueur des chaînes polymères, la nature du contre-ion du polymère vivant, les interactions intermoléculaires entre les chaînes polymères vivantes, le pouvoir complexant du solvant, la température de la solution polymère. Par conséquent, l'homme du métier ajuste la quantité de solvant au cas par cas.

Dans la réaction d'amorçage de la réaction de polymérisation est utilisé un composé connu comme amorceur de la polymérisation anionique des monomères utiles aux besoins de l'invention. De préférence, l'amorceur est un composé qui présente une liaison carbone-métal. L'amorceur est utilisé à un taux choisi en fonction de la longueur de chaîne souhaitée du polymère vivant et peut donc varier dans une large mesure.

Le polymère vivant est généralement préparé par polymérisation du premier monomère amorcée par un amorceur qui est un composé lithié. À titre d'amorceur lithié, on peut citer les organolithiens, comme les n-butyllithium, le sec-butyllithium et le tert-butyllithium communément utilisés dans la polymérisation anionique des monomères utiles aux besoins de l'invention.

La température de polymérisation pour former le polymère vivant peut varier dans une large mesure. Elle est

choisie en fonction notamment de la stabilité de la liaison carbone-métal dans le solvant de polymérisation, des coefficients de vitesse relatifs de la réaction d'amorçage et de la réaction de propagation, de la microstructure visée du polymère vivant. Traditionnellement, elle varie dans un domaine allant de -20 à 100°C, préférentiellement de 20 à 70°C.

De préférence, le polymère anionique vivant est un polymère vivant obtenu par polymérisation anionique du 1,3-butadiène, de l'isoprène, du styrène ou de leurs mélanges. Autrement dit, le premier monomère est préférentiellement le 1,3-butadiène, l'isoprène, le styrène ou leurs mélanges.

Le polymère anionique vivant peut être un homopolymère ou bien un copolymère dans le cas où le premier monomère est un mélange de monomères. Le copolymère peut être statistique ou bloc, puisque l'incorporation des co-monomères peut être contrôlée avec des conditions opératoires connues des procédés de polymérisation anionique. Par exemple, il est connu que la polarité du solvant de polymérisation et le mode d'alimentation des co-monomères dans le milieu de polymérisation anionique influencent l'incorporation relative des co-monomères.

Dans la préparation du composé diorganomagnésien asymétrique conforme à l'invention, la mise en contact du polymère anionique vivant avec l'halogénure d'un organomagnésien se fait préférentiellement par l'ajout d'une solution du polymère anionique vivant $R^ALi$ à une solution de l'halogénure d'un organomagnésien $R^B$-Mg-X. La solution du polymère anionique vivant $R^ALi$ est généralement une solution dans un solvant hydrocarboné, de préférence aliphatique tel que le n-hexane, le cyclohexane ou le méthylcyclohexane. La solution de l'halogénure d'un organomagnésien $R^B$-Mg-X est généralement une solution dans un éther, de préférence le diéthyléther ou le dibutyléther. La concentration du polymère anionique vivant $R^ALi$ est préférentiellement de 0.01 à 1 mole d'équivalent lithium/L, plus préférentiellement de 0.05 à 0.2 mole d'équivalent lithium /L, celle de la solution de l'organomagnésien $R^B$-Mg-X préférentiellement de 1 à 5 mol/L, plus préférentiellement de 2 à 3 mol/L.

La réaction entre le polymère anionique vivant $R^ALi$ et de l'halogénure d'un organomagnésien $R^B$-Mg-X est conduite typiquement à une température allant de 0°C à 60°C. La mise en contact est réalisée de préférence à une température comprise entre 0°C et 23°C.

Comme toute synthèse faite en présence de composés organométalliques, la mise en contact et la réaction ont lieu dans des conditions anhydres sous atmosphère inerte. Typiquement, les solvants et les solutions sont utilisés sous azote ou argon anhydre. Les différentes étapes du procédé sont conduites généralement sous agitation.

Une fois le diorganomagnésien asymétrique formé, il est récupéré généralement en solution après filtration conduite sous atmosphère inerte et anhydre. La solution de diorganomagnésien asymétrique est typiquement stockée avant son utilisation dans des récipients hermétiques, par exemple des bouteilles capsulées, à une température comprise entre -25°C et 23°C.

Comme tout composé organomagnésien, le composé diorganomagnésien $R^B$-Mg-$R^A$ utile aux besoins de l'invention peut se présenter sous la forme d'une entité monomère $(R^B\text{-Mg-}R^A)_1$ ou sous la forme d'une entité polymère $(R^B\text{-Mg-}R^A)_p$, p étant un nombre entier supérieur à 1, notamment dimère $(R^B\text{-Mg-}R^A)_2$. Par ailleurs, qu'il soit sous la forme d'une entité monomère ou polymère, il peut également se présenter sous la forme d'une entité coordinée à une ou plusieurs molécules d'un solvant, de préférence d'un éther tel que le diéthyléther, le tétrahydrofurane ou le méthyltétrahydrofurane.

Le composé diorganomagnésien asymétrique conforme à l'invention est tout particulièrement destiné à être utilisé comme co-catalyseur dans un système catalytique comprenant un complexe organométallique et utile à la polymérisation ou la copolymérisation d'oléfines ou de diènes. Le complexe organométallique est typiquement un métallocène ou un hémimétallocène de terre rare.

Le composé diorganomagnésien asymétrique a pour rôle d'activer le complexe organométallique vis-à-vis de la réaction de polymérisation, notamment dans la réaction d'amorçage de polymérisation. Il peut se substituer au co-catalyseur des systèmes catalytiques décrits par exemple dans les documents EP 1092731 A1, WO 2004035639 A1,

WO 2005028526 A1, WO2007045223 A2, WO2007045224 A2.

En particulier, le composé diorganomagnésien asymétrique conforme à l'invention est un des constituants essentiels d'un système catalytique, autre objet de l'invention. Utilisé comme co-catalyseur dans le système catalytique, le composé diorganomagnésien asymétrique permet d'augmenter l'activité catalytique du système catalytique dans la synthèse de polymères blocs. Les polymères sont typiquement des copolymères de diènes et d'oléfines. A titre d'oléfines, on peut citer particulièrement l'éthylène et les $\alpha$-oléfines, notamment celles ayant 3 à 18 atomes de carbone. A titre de diènes conviennent tout particulièrement les 1,3-diènes, plus particulièrement les 1,3-diènes ayant 4 à 24 atomes de carbone tel que le 1,3-butadiène et l'isoprène.

Le système catalytique conforme à l'invention a donc pour constituants de base le composé diorganomagnésien asymétrique conforme à l'invention et un métallocène de formule (IIIa) ou (IIIb)

$\{P(Cp^1)(Cp^2)Y\}$ (IIIa)

$Cp^3Cp^4Y$ (IIIb)

Y désignant un groupe comportant un atome de métal qui est une terre rare,
$Cp^1$, $Cp^2$, $Cp^3$ et $Cp^4$, identiques ou différents, étant choisis dans le groupe constitué par les groupes fluorényles, les groupes cyclopentadiényles et les groupes indényles, les groupes étant substitués ou non substitués,
P étant un groupe pontant les deux groupes $Cp^1$ et $Cp^2$, et comprenant un atome de silicium ou de carbone.

On rappelle que les terres rares sont des métaux et désignent les éléments scandium, yttrium et les lanthanides dont le numéro atomique varie de 57 à 71.

Selon une première variante de l'invention, le métallocène utilisé comme constituant de base dans le système catalytique conforme à l'invention répond à la formule (IIIa)

$\{P(Cp^1)(Cp^2)Y\}$ (IIIa)

dans laquelle

Y désigne un groupe comportant un atome de métal qui est une terre rare,
$Cp^1$ et $Cp^2$, identiques ou différents, sont choisis dans le groupe constitué par les groupes fluorényles, les groupes cyclopentadiényles et les groupes indényles, les groupes étant substitués ou non substitués,
P est un groupe pontant les deux groupes $Cp^1$ et $Cp^2$, et comprenant un atome de silicium ou de carbone.

Selon une deuxième variante de l'invention, le métallocène utilisé comme constituant de base dans le système catalytique conforme à l'invention répond à la formule (IIIb)

$Cp^3Cp^4Y$ (IIIb)

dans laquelle

Y désigne un groupe comportant un atome de métal qui est une terre rare,
$Cp^3$ et $Cp^4$, identiques ou différents, sont choisis dans le groupe constitué par les groupes fluorényles, les groupes cyclopentadiényles et les groupes indényles, les groupes étant substitués ou non substitués.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone ou encore par des radicaux trialkylsilyles tels que $SiMe_3$. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

A titre de groupes fluorényles substitués, on peut citer particulièrement le 2,7-ditertiobutyle-fluorényle, le 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

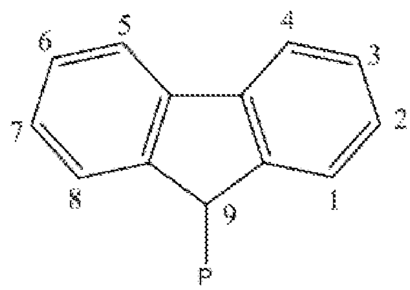

A titre de groupes cyclopentadiényles substitués, on peut citer particulièrement ceux substitués en position 2, plus particulièrement le groupe tétraméthylcyclopentadiényle. La position 2 (ou 5) désigne la position de l'atome de carbone qui est adjacent à l'atome de carbone auquel est attaché le pont P, comme cela est représenté dans le schéma ci-après.

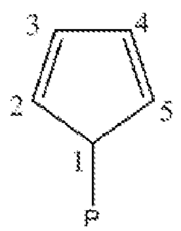

A titre de groupes indényles substitués, on peut citer particulièrement ceux substitués en position 2, plus particulièrement le 2-méthylindényle, le 2-phénylindényle. La position 2 désigne la position de l'atome de carbone qui est adjacent à l'atome de carbone auquel est attaché le pont P, comme cela est représenté dans le schéma ci-après.

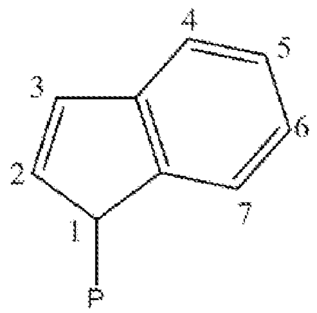

De préférence, le métallocène est de formule (IIIa).
Selon un mode de réalisation préférentiel de l'invention, $Cp^1$ et $Cp^2$ sont identiques et sont choisis dans le groupe constitué par les groupes fluorényles substitués et le groupe fluorényle non substitué de formule $C_{13}H_8$. Le système catalytique selon ce mode de réalisation préférentiel a la particularité de conduire à des copolymères de butadiène et d'éthylène qui comprennent en plus des unités monomères éthylène et des unités butadiène des unités cycliques 1,2-cyclohexane de formule suivante :

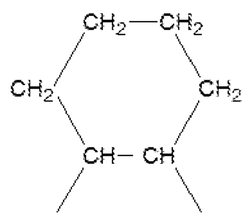

Avantageusement, $Cp^1$ et $Cp^2$ sont identiques et représentent chacun un groupe fluorényle non substitué de formule $C_{13}H_8$, représenté par le symbole Flu.
Selon un mode de réalisation préférentiel de l'invention, le symbole Y représente le groupe Met-G, avec Met désignant un atome de métal qui est une terre rare et avec G désignant un groupe comprenant le motif borohydrure $BH_4$ ou désignant un atome d'halogène choisi dans le groupe constitué par le chlore, le fluor, le brome et l'iode. Avantageusement, G désigne un atome de chlore ou le groupe de formule (IV) :

$$(BH_4)_{(1+y)}\text{-}L_y\text{-}N_x \qquad \text{(IV)}$$

dans laquelle

L représente un métal alcalin choisi dans le groupe constitué par le lithium, le sodium et le potassium,
N représente une molécule d'un éther,
x, nombre entier ou non, est égal ou supérieur à 0,
y, nombre entier, est égal ou supérieur à 0.

Très avantageusement, G désigne le groupe de formule (IV).
Comme éther convient tout éther qui a le pouvoir de complexer le métal alcalin, notamment le diéthyléther et le tétrahydrofurane.
Selon l'un quelconque des modes de réalisation de l'invention, le métal du métallocène utile au besoin de

l'invention, en l'espèce la terre rare, est de préférence un lanthanide dont le numéro atomique va de 57 à 71, de manière plus préférentielle le néodyme, Nd.

Le pont P reliant les groupes $Cp^1$ et $Cp^2$ répond de préférence à la formule $ZR^1R^2$, dans laquelle Z représente un atome de silicium ou de carbone, $R^1$ et $R^2$, identiques ou différents, représentent chacun un groupe alkyle comprenant de 1 à 20 atomes de carbone, de préférence un méthyle. Dans la formule $ZR^1R^2$, Z représente avantageusement un atome de silicium, Si.

Le métallocène utile à la synthèse du système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofurane ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Selon un mode de réalisation particulièrement préférentiel, le métallocène est de formule (III-1), (III-2), (III-3), (III-4) ou (III-5) :

$[Me_2Si(Flu)_2Nd(\mu\text{-}BH_4)_2Li(THF)]$ (III-1)

$[\{Me_2SiFlu_2Nd(\mu\text{-}BH_4)_2Li(THF)\}_2]$ (III-2)

$[Me_2SiFlu_2Nd(\mu\text{-}BH_4)(THF)]$ (III-3)

$[\{Me_2SiFlu_2Nd(\mu\text{-}BH_4)(THF)\}_2]$ (III-4)

$[Me_2SiFlu_2Nd(\mu\text{-}BH_4)]$ (III-5)

dans laquelle Flu représente le groupe $C_{13}H_8$.

Le système catalytique conforme à l''invention peut être préparé de façon traditionnelle par un procédé analogue à celui décrit dans la demande de brevet WO 2007054224 ou WO 2007054223. Par exemple on fait réagir dans un solvant hydrocarboné le composé diorganomagnésien asymétrique et le métallocène typiquement à une température allant de 20 à 80°C pendant une durée comprise entre 5 et 60 minutes. Les quantités de co-catalyseur et métallocène mises en réaction sont telles que le rapport entre le nombre de mole de Mg du co-catalyseur et le nombre de mole de métal de terre rare du métallocène va de préférence de 1 à 100, de manière plus préférentielle de 1 à moins de 10. La plage de valeurs allant de 1 à moins de 10 est notamment plus favorable pour l'obtention de polymères de masses molaires élevées. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du polymère conforme à l'invention.

Comme toute synthèse faite en présence de composé organométallique, la synthèse du métallocène, la synthèse du diorganomagnésien asymétrique et la synthèse du système catalytique ont lieu dans des conditions anhydres sous atmosphère inerte. Typiquement, les réactions sont conduites à partir de solvants et de composés anhydres sous azote ou argon anhydre.

Le système catalytique se présente généralement sous la forme d'une solution dans un solvant hydrocarboné. Le solvant hydrocarboné peut être aliphatique comme le méthylcyclohexane ou aromatique comme le toluène. Le solvant hydrocarboné est de préférence aliphatique, de manière plus préférentielle le méthylcyclohexane. Généralement, le système catalytique est stocké sous la forme d'une solution dans le solvant hydrocarboné avant d'être utilisé en polymérisation. On peut parler alors de solution catalytique qui comprend le système catalytique et le solvant hydrocarboné. La concentration de la solution catalytique est typiquement définie par la teneur en métal de métallocène dans la solution. La concentration en métal de métallocène a une valeur allant préférentiellement de 0.0001 à 0.2 mol/L, plus préférentiellement de 0.001 à 0.03 mol/L.

Le système catalytique conforme à l'invention est destiné à être utilisé dans un procédé de synthèse de polymères blocs, notamment élastomères et utilisables dans des compositions de caoutchouc, par exemple pour pneumatique. L'utilisation du sytème catatytique selon l'invention dans le procédé de polymère bloc permet d'augmenter la productivité du procédé en raison d'une augmentation de l'activité catalytique.

Le procédé, autre objet de l'invention, comprend une étape de polymérisation d'un deuxième monomère choisi dans le groupe des monomères constitués par les diènes conjugués, l'éthylène, les $\alpha$-monooléfines et leurs mélanges en présence du système catalytique conforme procédé de préparation d'un polymère.

Comme le procédé met en œuvre la polymérisation d'un monomère, dit deuxième monomère, en présence d'un système catalytique qui comprend un co-catalyseur constitué d'une chaîne polymère $R^A$, la chaîne polymère $R^A$ et la chaîne polymère résultant de la polymérisation du deuxième monomère sont constitutifs du polymère synthétisé par le procédé conforme à l'invention. Les polymères synthétisés par le procédé conforme à l'invention sont donc des polymères blocs, dibloc ou multibloc. En effet, la chaîne polymère $R^A$ peut être un homopolymère, un polymère bloc ou un polymère statistique. La chaîne polymère résultant de la polymérisation du deuxième monomère qui résulte de la polymérisation du deuxième monomère peut être un polymère statistique ou un polymère bloc, lorsque le deuxième monomère est un mélange de monomères.

De préférence, le deuxième monomère est l'éthylène ou un mélange d'un 1,3-diène et d'éthylène, le 1,3-diène étant de préférence le 1,3-butadiène, l'isoprène, ou leur mélange. Selon la microstructure et la longueur des chaînes polymères préparées par le procédé conforme à l'invention, le polymère peut être un élastomère.

La polymérisation du deuxième monomère est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Le deuxième monomère peut être introduit dans le réacteur contenant le solvant de polymérisation et le système catalytique ou inversement le système catalytique peut être introduit dans le réacteur contenant le solvant de polymérisation et le deuxième monomère. Le deuxième monomère et le système catalytique peuvent être introduits simultanément dans le réacteur contenant le solvant de polymérisation, notamment dans le cas d'une polymérisation en continu. La polymérisation est conduite typiquement dans des conditions anhydres et en l'absence d'oxygène, en présence éventuelle d'un gaz inerte. La température de polymérisation varie généralement dans un domaine allant de 40 à 150°C, préférentiellement 40 à 120°C. Elle est ajustée selon le deuxième monomère à polymériser. Si le deuxième monomère est un mélange de monomères contenant de l'éthylène, la copolymérisation est conduite préférentiellement à pression constante d'éthylène.

Dans le cas où la polymérisation d'un deuxième monomère est la polymérisation d'un mélange d'éthylène et de 1,3-diène dans un réacteur de polymérisation, un ajout continu d'éthylène et de 1,3-diène peut être réalisé dans le réacteur de polymérisation, auquel cas le réacteur de polymérisation est un réacteur alimenté. Ce mode de réalisation est tout particulièrement adapté pour une incorporation statistique ou aléatoire de l'éthylène et du 1,3-diène.

Une fois que le taux de conversion souhaité de la réaction de polymérisation du deuxième monomère est atteint, la réaction de polymérisation est stoppée par un agent de terminaison, comme par exemple un composé ayant un proton acide, tel qu'un alcool. Le polymère bloc peut être récupéré, notamment en le séparant du milieu réactionnel, par exemple en le coagulant dans un solvant provoquant sa coagulation ou en éliminant le solvant de polymérisation et tout monomère résiduel sous pression réduite ou sous l'effet d'un entraînement à la vapeur (opération de stripping).

En résumé, l'invention est mise en œuvre avantageusement selon l'un quelconque des modes de réalisation suivants 1 à 32 :

Mode 1 : Composé diorganomagnésien asymétrique de formule (I)

$$R^B\text{-Mg-}R^A \qquad (I)$$

$R^A$ étant différent de $R^B$,
$R^A$ étant une chaîne polymère contenant des unités d'un premier monomère choisi dans le groupe des monomères constitué par les 1,3-diènes, les $\alpha$-monoléfines aromatiques et leurs mélanges,
$R^B$ comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle, à la condition que si l'un des 2 atomes de carbone en ortho est substitué par un isopropyle, le deuxième atome de carbone en ortho n'est pas substitué par un isopropyle.

Mode 2 : Composé diorganomagnésien asymétrique selon le mode 1 dans lequel le composé diorganomagnésien est de formule (II)

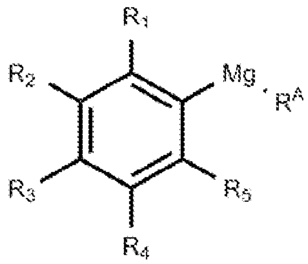

(II)

$R_1$ et $R_5$, identiques ou différents, représentent un méthyle ou un éthyle,
$R_2$, $R_3$ et $R_4$, identiques ou différents, étant un atome d'hydrogène ou un alkyle,
$R^A$ étant défini selon le mode 1.

Mode 3 : Composé diorganomagnésien asymétrique selon le mode 2 dans lequel $R_1$ et $R_5$ représentent un méthyle.

Mode 4 : Composé diorganomagnésien asymétrique selon le mode 2 ou 3 dans lequel $R_2$ et $R_4$ représentent un atome hydrogène.

Mode 5 : Composé diorganomagnésien asymétrique selon l'un quelconque des modes 2 à 4 dans lequel $R_3$ est identique à $R_1$ et à $R_5$.

Mode 6 : Composé diorganomagnésien asymétrique selon l'un quelconque des modes 1 à 5 dans lequel les atomes de carbone du noyau benzénique en ortho du magnésium sont substitués par un méthyle ou un éthyle.

Mode 7 : Composé diorganomagnésien asymétrique selon l'un quelconque des modes 1 à 6 dans lequel les atomes de carbone du noyau benzénique en ortho du magnésium sont substitués par un méthyle.

Mode 8 : Composé diorganomagnésien asymétrique selon l'un quelconque des modes 1 à 7 dans lequel $R^A$ est une chaîne homopolymère de 1,3-butadiène, d'isoprène ou de styrène ou une chaîne copolymère de monomères choisis parmi le 1,3-butadiène, l'isoprène et le styrène.

Mode 9 : Composé diorganomagnésien asymétrique selon l'un quelconque des modes 1 à 7 dans lequel la chaîne polymère représentée par le symbole $R^A$ est préparée par polymérisation anionique.

Mode 10 : Système catalytique à base au moins :

d'un métallocène de formule (IIIa) ou (IIIb),
d'un composé diorganomagnésien à titre de co-catalyseur,

$\{P(Cp^1)(Cp^2)Y\}$ (II)

$Cp^3Cp^4Y$ (IIIb)

Y désignant un groupe comportant un atome de métal qui est une terre rare,
$Cp^1$, $Cp^2$, $Cp^3$ et $Cp^4$, identiques ou différents, étant choisis dans le groupe constitué par les groupes fluorényles, les groupes cyclopentadiényles et les groupes indényles, les groupes étant substitués ou non substitués,
P étant un groupe pontant les deux groupes $Cp^1$ et $Cp^2$, et comprenant un atome de silicium ou de carbone,
le composé diorganomagnésien étant un composé diorganomagnésien asymétrique défini à l'un quelconque des modes 1 à 9.

Mode 11 : Système catalytique selon le mode 10 dans lequel le métallocène est de formule (IIIa).

Mode 12 : Système catalytique selon l'un quelconque des modes 10 à 11 dans lequel $Cp^1$ et $Cp^2$ sont identiques et sont choisis dans le groupe constitué par les groupes fluorényles substitués et le groupe fluorényle non substitué de formule $C_{13}H_8$.

Mode 13 : Système catalytique selon l'un quelconque des modes 10 à 12 dans lequel $Cp^1$ et $Cp^2$ représentent chacun

un groupe fluorényle non substitué de formule $C_{13}H_8$.

Mode 14 : Système catalytique selon l'un quelconque des modes 10 à 13, dans lequel le symbole Y représente le groupe Met-G, avec Met désignant un atome de métal qui est une terre rare et G désignant un groupe comprenant le motif borohydrure $BH_4$ ou désignant un atome d'halogène choisi dans le groupe constitué par le chlore, le fluor, le brome et l'iode.

Mode 15 : Système catalytique selon le mode 14 dans lequel G désigne le chlore ou le groupe de formule (IV)

$$(BH_4)_{(1+y)}\text{-}L_y\text{-}N_x \qquad \text{(IV)}$$

dans laquelle

L représente un métal alcalin choisi dans le groupe constitué par le lithium, le sodium et le potassium,
N représente une molécule d'un éther, de préférence diéthyléther ou tétrahydrofurane,
x, nombre entier ou non, est égal ou supérieur à 0,
y, nombre entier, est égal ou supérieur à 0.

Mode 16 : Système catalytique selon le mode 15 dans lequel G désigne le groupe de formule (IV).

Mode 17 : Système catalytique selon l'un quelconque des modes 10 à 16 dans lequel la terre rare est un lanthanide dont le numéro atomique varie de 57 à 71.

Mode 18 : Système catalytique selon l'un quelconque des modes 10 à 17 dans lequel la terre rare est le néodyme, Nd.

Mode 19 : Système catalytique selon l'un quelconque des modes 10 à 18 dans lequel le pont P répond à la formule $ZR^1R^2$, Z représentant un atome de silicium ou de carbone, $R^1$ et $R^2$, identiques ou différents, représentant chacun un groupe alkyle comprenant de 1 à 20 atomes de carbone, de préférence un méthyle.

Mode 20 : Système catalytique selon le mode 19 dans lequel Z est Si.

Mode 21 : Système catalytique selon l'un quelconque des modes 10 à 20 dans lequel le métallocène est (III-1), (III-2), (III-3), (III-4) ou (III-5) :

$$[Me_2Si(Flu)_2Nd(\mu\text{-}BH_4)_2Li(THF)] \qquad \text{(III-1)}$$

$$[\{Me_2SiFlu_2Nd(\mu\text{-}BH_4)_2Li(THF)\}_2] \qquad \text{(III-2)}$$

$$[Me_2SiFlu_2Nd(\mu\text{-}BH_4)(THF)] \qquad \text{(III-3)}$$

$$[\{Me_2SiFlu_2Nd(\mu\text{-}BH_4)(THF)\}_2] \qquad \text{(III-4)}$$

$$[Me_2SiFlu_2Nd(\mu\text{-}BH_4)] \qquad \text{(III-5)}$$

Flu représentant le groupe $C_{13}H_8$.

Mode 22 : Système catalytique selon l'un quelconque des modes 10 à 21 dans lequel le rapport entre le nombre de mole de Mg du co-catalyseur et le nombre de mole de métal de terre rare du métallocène va de 1 à 100.

Mode 23 : Système catalytique selon l'un quelconque des modes 10 à 22 dans lequel le rapport entre le nombre de mole de Mg du co-catalyseur et le nombre de mole de métal de terre rare du métallocène va de 1 à 10.

Mode 24 : Système catalytique selon l'un quelconque des modes 10 à 23, lequel système catalytique se présente sous la forme d'une solution dans un solvant hydrocarboné.

Mode 25 : Système catalytique selon le mode 24 dans lequel le solvant hydrocarboné est aromatique ou aliphatique, de préférence aliphatique, de manière plus préférentielle le méthylcyclohexane.

Mode 26 : Système catalytique selon l'un quelconque des modes 24 à 25 dans lequel la concentration molaire en métal du métallocène dans le système catalytique a une valeur allant de 0,0001 à 0,2mol/L, préférentiellement de 0,001 à 0,03 mol/L.

Mode 27 : Procédé de préparation d'un polymère qui comprend une étape de polymérisation d'un deuxième monomère choisi dans le groupe des monomères constitués par les diènes conjugués, l'éthylène, les $\alpha$-monooléfines et leurs mélanges en présence d'un système catalytique défini à l'un quelconque des modes 10 à 26.

Mode 28 : Procédé selon le mode 27 dans lequel le deuxième monomère est l'éthylène ou un mélange d'un 1,3-diène et d'éthylène.

Mode 29 : Procédé selon le mode 28 dans lequel le 1,3-diène est le 1,3-butadiène, l'isoprène ou leur mélange.

Mode 30 : Procédé de préparation d'un composé diorganomagnésien asymétrique défini à l'un quelconque des modes 1 à 9 qui comprend :

- la mise en contact d'un polymère anionique vivant de formule $R^ALi$ avec un halogénure d'un organomagnésien de formule $R^B$-Mg-X,
- la réaction du polymère anionique vivant et de l'halogénure,

X étant un halogène choisi dans le groupe constitué par le chlore, le fluor, le brome et l'iode, $R^A$ et $R^B$ étant définis selon l'un quelconque des modes 1 à 9.

Mode 31 : Procédé selon le mode 30 dans lequel X est un atome de brome ou un atome de chlore.

Mode 32 : Procédé selon le mode 30 ou 31 dans lequel X est un atome de brome.

Les caractéristiques précitées de la présente invention, ainsi que d'autres, seront mieux comprises à la lecture de la description suivante de plusieurs exemples de réalisation de l'invention, donnés à titre illustratif et non limitatif.

**Exemples de réalisation de l'invention**

1. Chromatographie à exclusion de taille (SEC) :

On a déterminé les masses molaires par calibration universelle en utilisant des étalons de polystyrène certifiés par " Polymer Laboratories " et une double détection avec réfractomètre et couplage au viscosimètre.

Sans être une méthode absolue, la SEC permet d'appréhender la distribution des masses molaires d'un polymère. À partir de produits étalons commerciaux de type Polystyrène les différentes masses molaires moyennes en nombre (Mn) et en poids (Mw) peuvent être déterminées et l'indice de polymolécularité, également appelé dispersité calculé (Ip = Mw/Mn). On solubilise le polymère dans le tétrahydrofurane (THF) à une concentration de 1 g/L, on filtre la solution sur un filtre de porosité de 0.45 μm,puis on l'injecte dans un chromatographe équipé de 2 détecteurs, un réfractomètre " Waters 410 " et un viscosimètre. à l'aide d'un injecteur " Waters 717 " et d'une pompe " Waters 515 HPLC " à un débit de 1 $ml.min^{-1}$ dans une série de colonnes " Polymer Laboratories ".

Cette série de colonnes, placée dans une enceinte thermostatée à 45°C, est composée de :

- 1 précolonne PL Gel 5 μm,
- 2 colonnes PL Gel 5 μm Mixte C,
- 1 colonne PL Gel 5 μm-500 Å.

2. Résonance magnétique nucléaire (RMN) (synthèse du polymère contenant des unités d'un premier monomère) :

Les spectres sont acquis sur un spectromètre Brüker Avance III 500 MHz équipé d'une cryo-sonde « large bande » BBIz-grad 5 mm. Les échantillons sont solubilisés dans le 1,2-dichlorobenzène d4. La calibration est réalisée sur l'impureté protonnée du 1,2-dichlorobenzène à 7.20 ppm en RMN 1H. L'expérience RMN 1H quantitative, utilise une séquence simple impulsion 30° et un délai de répétition de 5 secondes entre chaque acquisition.

3. Résonance magnétique nucléaire (RMN) (synthèse du polymère bloc) :

Les polymères blocs sont solubilisés dans le 1,2-dichlorobenzène d4. La calibration est réalisée sur l'impureté protonnée du 1,2-dichlorobenzène à 7.20 ppm en RMN 1H.

L'expérience RMN 1H quantitative, utilise une séquence simple impulsion 30° et un délai de répétition de 5 secondes entre chaque acquisition. 64 à 256 accumulations sont réalisées. Les expériences bidimensionnelles 1H/13C sont utilisées dans le but de déterminer la structure des unités des polymères. L'expérience 1H-13C HMBC (heteronuclear multiple bond correlation) permet de détecter des corrélations à longue distance par couplage J entre protons et noyaux de carbone-13.

Les spectres RMN 1H et le spectre de corrélation RMN 2D $^{1}H/^{13}C$ $^{1}J$ HSQC édité permettent de déterminer la microstructure du polymère bloc et la proportion de chaque bloc dans l'échantillon.

Détermination du pourcentage de polymère bloc par DOSY :

L'expérience DOSY, méthode RMN, permet d'analyser des mélanges complexes et la détection de traces. Le but de cette expérience est de démontrer que le polymère bloc représente l'essentiel de l'échantillon et que la présence d'homopolymère est très faible.

L'analyse par RMN DOSY permet de séparer les espèces présentes, notamment des matrices polymères, par analyse de leur coefficient de diffusion en solution. Le principe de la technique est le suivant :
L'expérience DOSY consiste à enregistrer des spectres protons en faisant varier la force G des gradients appliquée et ainsi, la force de diffusion. Une augmentation linéaire de l'intensité des gradients va entrainer une décroissance exponentielle de l'intensité du signal RMN.

L'expérience DOSY va donner une carte bidimensionnelle. La 2ème dimension F2 de la DOSY correspond, après traitement par la transformée de Fourier, à la dimension 1H. La 1ère dimension F1 correspond à la décroissance du signal RMN en fonction de la force gradient appliquée. Apres traitement de la dimension F2, on extrait le coefficient de diffusion à partir de l'équation (1), et on obtient une carte DOSY.

$$I=I0.\exp(-D\gamma^2 G^2 \delta^2 (\Delta-\delta/3)) \qquad (1)$$

Si les deux matrices ont un coefficient de diffusion identique, cela signifie que les deux matrices ont le même rayon hydrodynamique, et sont donc greffées. En revanche, si les deux matrices présentes deux coefficients de diffusion différents, cela signifie qu'elles sont libres l'une de l'autre.

L'équation qui décrit le coefficient de diffusion est la suivante :

$$D = \frac{k_B T}{6\pi\eta r_S}$$

L'expérience a été conduit sur des échantillons de poly(butadiène-b-poly(éthylène-co-butadiène) synthétisé selon le procédé conforme à l'invention.

L'enregistrement de deux spectres RMN 1D 1H avec un filtre de diffusion, l'un avec un gradient de champs magnétiques fixé à 90% de la puissance maximale de l'amplificateur gradient et l'autre à 1% de cette valeur, permet par comparaison avec le spectre RMN 1H d'observer la part de perte de signal due à de la diffusion spatiale des molécules et à la relaxation de l'aimantation. La perte de signal due à de la diffusion est alors attribuée à des « petites molécules » non greffées à la matrice polymère (réactifs, antioxydants, solvants, ...).

Le déplacement chimique compris entre 5.18 et 4.96 ppm est attribué aux motifs 1,4 des unités isoprènes, le déplacement chimique compris entre 4.79 et 4.49 ppm est attribué aux motifs 3,4 des unités isoprène.. Le déplacement chimique compris entre 5.36-5.10 ppm est attribué aux motifs 1,4 des unités butadiène, le signal compris entre 5.63 et 5.36 ppm est attribué aux motifs 1,2 des unités butadiène.

Les déplacements chimiques compris entre 6.0-5.63 ppm et 1.75-1.63 ppm sont attribués aux motifs cycliques à 6 membres, le 1,2-cyclohexanediyle.

Le signal à 1.18 ppm est attribué aux unités éthylène.

Matières premières :

Le bromure de phényl magnésium en solution dans le diéthyléther à 3 mol/L, le bromure de mésityl magnésium en solution dans le diéthyléther à 1 mol/L, le bromure de triisopropylphénylmagnésium en solution dans le tétrahydrofurane à 0.5 mol/L sont obtenus chez Sigma-Aldrich et utilisés sans purification préalable.

4. Exemple 1 conforme à l'invention :

Synthèse d'un polyisoprène vivant :

280 mL de méthylcyclohexane (MCH) dégazé est introduit dans une bouteille steinie de 750 mL. 5.64 g d'isoprène est introduit dans le milieu réactionnel suivi de 1 mL de sec-BuLi à 0.38 mol/L. La polymérisation est maintenue à 50°C pendant 2h. La conversion mesurée, par taux de matière sec, est de 96%.

Pour sa caractérisation, le polyisoprène vivant est désactivé par l'ajout de méthanol dégazé. La solution de polymère est séchée dans une étuve à 50°C sous vide avec un balayage d'azote pendant 48h.

La masse molaire moyenne en nombre du polyisoprène est de 22350 g/mol (Ip = 1.09), les taux molaires des motifs 1,4 et 3,4 des unités isoprène sont respectivement 94.2% et 5.8%. La macrostructure et la microstructure du polyisoprène sont déterminées respectivement par chromatographie à exclusion de taille et par résonance magnétique nucléaire, comme décrit ci-dessus respectivement dans les paragraphes 1 et2.

Synthèse d'un diorganomagnésien asymétrique (polyisoprène-Mg-mésityl) :

Le diorganomagnésien asymétrique (polyisoprène-Mg-mésityl) est synthétisé par réaction d'échange de métal lithium-magnésium. 0.3mL de mésityl-Mg-Br à 1 mol/L dans le dibutyléther est introduit sur le polyisoprène vivant lithié. Le milieu réactionnel est agité pendant 1h à 23°C.

Synthèse d'un polymère bloc :

Dans un réacteur en verre de 500mL, chauffé à 50°C, on introduit une solution contenant 280 mL du diorganomagnésien asymétrique polyisoprène-Mg-mésityl et 48.8mg de métallocène $[\{Me_2SiFlu_2Nd(\mu\text{-}BH_4)_2Li(THF)\}]_2$ (76.3$\mu$mol).

Puis un mélange gazeux contenant 20% en mole de butadiène et 80% en mole d'éthylène est introduit dans le réacteur. La polymérisation est conduite à 50°C et à une pression initiale de 4 bars absolue dans le réacteur.

La réaction de polymérisation est stoppée, après formation de 9g de polymère, par refroidissement, dégazage du réacteur et ajout de méthanol. Le polymère est récupéré, puis séché. La masse pesée permet de déterminer l'activité catalytique moyenne du système catalytique exprimée en kilogramme de polymère synthétisé par mole de métal néodyme et par heure (kg/mol.h).

L'activité catalytique est de 23 Kg/mol.h.

La macrostructure et la microstructure du polymère sont déterminées respectivement par chromatographie à exclusion de taille selon la méthode décrite dans le paragraphe 1 et par résonance magnétique nucléaire, comme décrit ci-dessus dans le paragraphe 2. Les résultats de RMN figurent dans le tableau 1 qui donne le pourcentage molaire des unités dans le copolymère dibloc. Les résultats des caractérisations par SEC et RMN montrent que le polymère contient 30% en masse de polyisoprène et 70% en masse d'un copolymère bloc constitué d'un premier bloc de polyisoprène et d'un second bloc statistique d'éthylène et de 1,3-butadiène.

Tableau 1

| Unité | dibloc |
|---|---|
| Butadiène, motif 1,2 | 11 |
| Butadiène, motif 1,4 | 5 |
| Ethylène | 82 |
| 1,2-cyclohexanediyle | 2 |
| Isoprène, motif 1,4 | 93,9 $\pm$ 0,9 |
| Isoprène, motif 3,4 | 6,1 $\pm$ 0,2 |

5. Exemple 2 conforme à l'invention:

Synthèse d'un polyisoprène vivant :

Dans un réacteur de 500 mL est introduit 100 mL de méthylcyclohexane (MCH) préalablement barboté à l'azote. 1 mL de sec-BuLi à 0.38 mol/L est introduit dans le réacteur. Le réacteur est chauffé à 50°C puis un mélange d'isoprène (5.64 g) et de MCH (100 mL) est introduit dans le réacteur.

La polymérisation est maintenue 2h à 50°C pour atteindre 100% de conversion.

Synthèse d'un diorganomagnésien asymétrique (polyisoprène-Mg-mésityl) :

0.3 mL de Mes-Mg-Br à 1 mol/L en solution dans 20 mL de MCH est introduit dans le réacteur contenant le polyisoprène anionique vivant. Le milieu réactionnel est agité pendant 1h à 50°C.

Synthèse d'un polymère bloc :

48.8 mg de métallocène $[\{Me_2SiFlu_2Nd(\mu\text{-}BH_4)_2Li(THF)\}]_2$ (76.3μmol) en solution dans 40 mL de MCH est introduit dans le milieu réactionnel contenant le diorganomagnésien asymétrique (polyisoprène-Mg-mésityl). 40 mL de MCH supplémentaire sont utilisés pour rincer la bouteille steinie ayant contenu le métallocène, puis introduits dans le milieu réactionnel.

Le réacteur est ensuite conditionné sous vide, puis un mélange gazeux contenant 20% en mole de butadiène et 80% en mole d'éthylène est introduit dans le réacteur. La polymérisation est conduite à 50°C, à une pression initiale de 4 bars absolue dans le réacteur en verre.

La réaction de polymérisation est stoppée, après formation de 11g de polymère, par refroidissement, dégazage du réacteur et ajout de méthanol. Le polymère est récupéré puis séché. La masse pesée permet de déterminer l'activité catalytique moyenne du système catalytique exprimée en kilogramme de polymère synthétisé par mole de métal néodyme et par heure (kg/mol.h).

L'activité catalytique est de 37 Kg/mol.h.

La macrostructure et la microstructure du polymère sont déterminées respectivement par chromatographie à exclusion de taille selon la méthode décrite dans le paragraphe 1 et par résonance magnétique nucléaire, comme décrit ci-dessus dans le paragraphe 2. Les résultats de RMN figurent dans le tableau 2 qui donne le pourcentage molaire des unités dans le copolymère dibloc. Les résultats des caractérisations par SEC et RMN montrent que le polymère contient 15% en masse de polyisoprène et 85% en masse d'un polymère bloc constitué d'un premier bloc de polyisoprène et d'un second bloc statistique d'éthylène et de 1,3-butadiène.

Tableau 2

| Unité | dibloc |
|---|---|
| Butadiène, motif 1,2 | 8 |
| Butadiène, motif 1,4 | 4 |
| Ethylène | 84 |
| 1,2-cyclohexanediyle | 4 |
| Isoprène, motif 1,4 | 93,8 ± 0,9 |
| Isoprène, motif 3,4 | 6,2 ± 0,1 |

6. Exemple 3 conforme à l'invention :

Synthèse d'un polyisoprène vivant :

280 mL de méthylcyclohexane (MCH) dégazé est introduit dans une bouteille steinie de 750 mL. 5.64 g d'isoprène est introduit dans le milieu réactionnel suivi de 5.5 mL de n-BuLi à 0.06 mol/L. La polymérisation est maintenue à 50°C pendant 2h. La conversion mesurée, par taux de matière sec, est de 85%.

La masse molaire moyenne en nombre du polyisoprène est de 22170 g/mol (Ip = 1.55), les taux molaires des motifs 1,4 et 3,4 des unités isoprène sont respectivement 94.1% et 5.9%. La macrostructure et la microstructure du polyisoprène sont déterminées respectivement par chromatographie à exclusion de taille et par résonance magnétique nucléaire, comme décrit ci-dessus respectivement dans les paragraphes 1 et 2.

Synthèse d'un diorganomagnésien asymétrique (polyisoprène-Mg-mésityl) :

Le diorganomagnésien asymétrique (polyisoprène-Mg-mésityl) est synthétisé par réaction d'échange de métal lithium-magnésium. 0.28 mL de mésityl-Mg-Br à 1 mol/L dans le di-butyléther est introduit sur le polyisoprène vivant lithié. Le milieu réactionnel est agité pendant 1h à 23°C.

Synthèse d'un polymère bloc :

Dans un réacteur en verre de 500 mL, chauffé à 80°C, on introduit une solution contenant 280 mL du diorganomagnésien asymétrique polyisoprène-Mg-mésityl et 42.4 mg de métallocène $[\{Me_2SiFlu_2Nd(\mu\text{-}BH_4)_2Li(THF)\}]_2$ (76.3$\mu$mol).

Puis un mélange gazeux contenant 20% en mole de butadiène et 80% en mole d'éthylène est introduit dans le réacteur. La polymérisation est conduite à 80°C et à une pression initiale de 4 bars absolue dans le réacteur.

La réaction de polymérisation est stoppée, après formation de 3 g de polymère, par refroidissement, dégazage du réacteur et ajout de méthanol. Le polymère est récupéré, puis séché. La masse pesée permet de déterminer l'activité catalytique moyenne du système catalytique exprimée en kilogramme de polymère synthétisé par mole de métal néodyme et par heure (kg/mol.h).

L'activité catalytique est de 346 Kg/mol.h.

La macrostructure et la microstructure du polymère sont déterminées respectivement par chromatographie à exclusion de taille selon la méthode décrite dans le paragraphe 1 et par résonance magnétique nucléaire, comme décrit ci-dessus dans le paragraphe 2. Les résultats de RMN figurent dans le tableau 3 qui donne le pourcentage molaire des unités dans le copolymère dibloc. Les résultats des caractérisations par SEC et RMN montrent que le polymère contient 50% en masse de polyisoprène et 50% en masse d'un copolymère bloc constitué d'un premier bloc de polyisoprène et d'un second bloc statistique d'éthylène et de 1,3-butadiène.

Tableau 3

| Unité | dibloc |
|---|---|
| Butadiène, motif 1,2 | 8 |
| Butadiène, motif 1,4 | 11 |
| Ethylène | 81 |
| 1,2-cyclohexanediyle | 0 |
| Isoprène, motif 1,4 | 94.1 $\pm$ 0,9 |
| Isoprène, motif 3,4 | 5.9 $\pm$ 0,2 |

7. Exemple 4 conforme à l'invention :

Synthèse d'un polybutadiène vivant :

280 mL de méthylcyclohexane (MCH) dégazé est introduit dans une bouteille steinie de 750 mL. 5.64 g de butadiène est introduit dans le milieu réactionnel suivi de 1 mL de sec-BuLi à 0.38 mol/L. La polymérisation est maintenue à 50°C pendant 2h. La conversion mesurée, par taux de matière sec, est de 88%.

Pour sa caractérisation, le polybutadiène vivant est désactivé par l'ajout de méthanol dégazé. La solution de polymère est séchée dans une étuve à 50°C sous vide avec un balayage d'azote pendant 48h.

La masse molaire moyenne en nombre du polybutadiène est de 23100 g/mol (Ip = 1.08), les taux molaires des motifs 1,4 et 1,2 des unités butadiène sont respectivement 92.8% et 7.2%. La macrostructure et la microstructure du polybutadiène sont déterminées respectivement par chromatographie à exclusion de taille et par résonance magnétique nucléaire, comme décrit ci-dessus respectivement dans les paragraphes 1 et 2.

Synthèse d'un diorganomagnésien asymétrique (polybutadiène-Mg-mésityl) :

Le diorganomagnésien asymétrique (polybutadiène-Mg-mésityl) est synthétisé par réaction d'échange de métal lithium-magnésium. 0.3mL de mésityl-Mg-Br à 1 mol/L dans le dibutyléther est introduit sur le polybutadiène vivant lithié. Le milieu réactionnel est agité pendant 1h à 23°C.

Synthèse d'un polymère bloc :

Dans un réacteur en verre de 500mL, chauffé à 80°C, on introduit une solution contenant 280 mL du diorganomagnésien asymétrique polybutadiène-Mg-mésityl et 45.1mg de métallocène [{$Me_2SiFlu_2Nd(\mu-BH_4)_2Li(THF)$}]$_2$ (76.3µmol).

Puis un mélange gazeux contenant 20% en mole de butadiène et 80% en mole d'éthylène est introduit dans le réacteur. La polymérisation est conduite à 80°C et à une pression initiale de 4 bars absolue dans le réacteur.

La réaction de polymérisation est stoppée, après formation de 3 g de polymère, par refroidissement, dégazage du réacteur et ajout de méthanol. Le polymère est récupéré, puis séché. La masse pesée permet de déterminer l'activité catalytique moyenne du système catalytique exprimée en kilogramme de polymère synthétisé par mole de métal néodyme et par heure (kg/mol.h).

L'activité catalytique est de 193 Kg/mol.h.

La macrostructure et la microstructure du polymère sont déterminées respectivement par chromatographie à exclusion de taille selon la méthode décrite dans le paragraphe 1 et par résonance magnétique nucléaire, comme décrit ci-dessus dans le paragraphe 2. Les résultats de RMN figurent dans le tableau 4 qui donne le pourcentage molaire des unités dans le copolymère dibloc. Les résultats des caractérisations par SEC et RMN montrent que le polymère contient 30% en masse de polybutadiène et 70% en masse d'un copolymère bloc constitué d'un premier bloc de polybutadiène et d'un second bloc statistique d'éthylène et de 1,3-butadiène.

Tableau 4

| Unité | dibloc |
|---|---|
| Butadiène, motif 1,2 | 15.3 |
| Butadiène, motif 1,4 | 84.7 |
| Ethylène | 39 |
| 1,2-cyclohexanediyle | 6 |

8. Exemple 5 non conforme :

Synthèse d'un polybutadiène vivant :

50 mL de toluène (MCH) dégazé est introduit dans une bouteille steinie de 250 mL. 2.5 g de butadiène est introduit dans le milieu réactionnel suivi de 0.54 mL de n-BuLi à 0.19 mol/L. La polymérisation est maintenue à 60°C pendant 1h30. La conversion mesurée, par taux de matière sec, est de 91%.

Pour sa caractérisation, le polybutadiène vivant est désactivé par l'ajout de méthanol dégazé. La solution de polymère est séchée dans une étuve à 50°C sous vide avec un balayage d'azote pendant 48h.

La masse molaire moyenne en nombre du polybutadiène est de 50750 g/mol (Ip = 1.08). La macrostructure est déterminée par chromatographie à exclusion de taille, comme décrit ci-dessus dans le paragraphe 1.

Synthèse d'un polymère bloc :

Dans un réacteur en verre de 500mL, chauffé à 80°C, on introduit une solution contenant 240 mL de toluène et de 62.2mg de métallocène [{$Me_2SiFlu_2Nd(\mu-BH_4)_2Li(THF)$}]$_2$ (96.5µmol). La solution de polybutadiène vivante, préparée dans le paragraphe précédent, est ajoutée dans le réacteur puis un mélange gazeux contenant 20% en mole de butadiène et 80% en mole d'éthylène est introduit dans le réacteur. La polymérisation est conduite à 80°C et à une pression initiale de 4 bars absolue dans le réacteur.

La réaction de polymérisation est stoppée, après formation de 3 g de polymère, par refroidissement, dégazage du réacteur et ajout de méthanol. Le polymère est récupéré, puis séché. La masse pesée permet de déterminer l'activité catalytique moyenne du système catalytique exprimée en kilogramme de polymère synthétisé par mole de métal néodyme et par heure (kg/mol.h).

L'activité catalytique est de 59 Kg/mol.h.

La macrostructure du polymère est déterminée par chromatographie à exclusion de taille selon la méthode décrite dans le paragraphe 1. Le résultat de caractérisations par SEC montre que le polymère contient 50% en masse de polybutadiène et 50% en masse d'un copolymère bloc constitué d'un premier bloc de polybutadiène et d'un second bloc statistique d'éthylène et de 1,3-butadiène.

9. Exemple 6 non conforme à l'invention :

Synthèse d'un polybutadiène vivant :

50 mL de toluène (MCH) dégazé est introduit dans une bouteille steinie de 250 mL. 1 g de butadiène est introduit dans le milieu réactionnel suivi de 0.54 mL de n-BuLi à 0.19 mol/L. La polymérisation est maintenue à 60°C pendant 1h30.

Pour sa caractérisation, le polybutadiène vivant est désactivé par l'ajout de méthanol dégazé. La solution de polymère est séchée dans une étuve à 50°C sous vide avec un balayage d'azote pendant 48h.

La masse molaire moyenne en nombre du polybutadiène est de 17140 g/mol (Ip = 1.12). La macrostructure est déterminée par chromatographie à exclusion de taille comme décrit ci-dessus dans le paragraphe 1.

Synthèse d'un polymère bloc :

Dans un réacteur en verre de 500mL, chauffé à 80°C, on introduit une solution contenant 246 mL de toluène et de 61.7mg de métallocène $[\{Me_2SiFlu_2Nd(\mu\text{-}BH_4)_2Li(THF)\}]_2$ (96.5$\mu$mol). La solution de polybutadiène vivant, préparée dans le paragraphe précédent, est ajoutée dans le réacteur puis un mélange gazeux contenant 20% en mole de butadiène et 80% en mole d'éthylène est introduit dans le réacteur. La polymérisation est conduite à 80°C et à une pression initiale de 4 bars absolue dans le réacteur.

La réaction de polymérisation est stoppée, après formation de 3 g de polymère, par refroidissement, dégazage du réacteur et ajout de méthanol. Le polymère est récupéré, puis séché. La masse pesée permet de déterminer l'activité catalytique moyenne du système catalytique exprimée en kilogramme de polymère synthétisé par mole de métal néodyme et par heure (kg/mol.h).

L'activité catalytique est de 75 Kg/mol.h.

La macrostructure du polymère est déterminée respectivement par chromatographie à exclusion de taille selon la méthode décrite dans le paragraphe 1. Les résultats des caractérisations par SEC montrent que le polymère contient 30% en masse de polybutadiène et 70% en masse d'un copolymère bloc constitué d'un premier bloc de polybutadiène et d'un second bloc statistique d'éthylène et de 1,3-butadiène.

Le tableau 5 répertorie les activités catalytiques et les productivités selon qu'un procédé conforme à l'invention (exemples 3 et 4) ou non conforme à l'invention (exemples 5 et 6) est utilisé.

Tableau 5

| Exemple | Co-catalyseur | Activité (Kg/mol/h) | Productivité (g/g) |
|---|---|---|---|
| 3 | PI-Mg-Mes | 346 | 90 |
| 4 | PB-Mg-Mes | 193 | 75 |
| 5 | PBLi | 59 | 24 |
| 6 | PBLi | 75 | 29 |

Les résultats montrent que le procédé conforme à l'invention est un procédé bien plus efficace vis-à-vis de l'activité catalytique et bien plus productif que le procédé non conforme à l'invention dans la synthèse de polymère bloc. En résumé, l'utilisation d'un composé diorganomagnésien conforme à l'invention comme co-catalyseur permet d'améliorer significativement l'activité catalytique et la productivité dans la synthèse de polymère bloc.

## Revendications

1. Composé diorganomagnésien asymétrique de formule (I)

$$R^B\text{-}Mg\text{-}R^A \qquad (I)$$

$R^A$ étant différent de $R^B$,
$R^A$ étant une chaîne polymère contenant des unités d'un premier monomère choisi dans le groupe des monomères constitué par les 1,3-diènes, les $\alpha$-monoléfines aromatiques et leurs mélanges,
$R^B$ comprenant un noyau benzénique substitué par l'atome de magnésium, l'un des atomes de carbone du noyau

benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle, à la condition que si l'un des 2 atomes de carbone en ortho est substitué par un isopropyle, le deuxième atome de carbone en ortho n'est pas substitué par un isopropyle.

**2.** Composé diorganomagnésien asymétrique selon la revendication 1 dans lequel le composé diorganomagnésien est de formule (II)

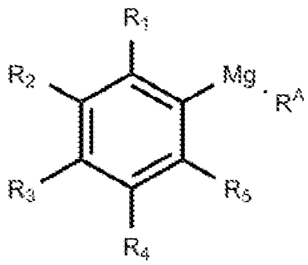

(II)

$R_1$ et $R_5$, identiques ou différents, représentent un méthyle ou un éthyle, de préférence un méthyle,
$R_2$, $R_3$ et $R_4$, identiques ou différents, étant un atome d'hydrogène ou un alkyle,
$R^A$ étant défini selon la revendication 1.

**3.** Composé diorganomagnésien asymétrique selon l'une quelconque des revendications 1 à 2 dans lequel les atomes de carbone du noyau benzénique en ortho du magnésium sont substitués par un méthyle ou un éthyle, de préférence un méthyle.

**4.** Composé diorganomagnésien asymétrique selon l'une quelconque des revendications 1 à 3 dans lequel $R^A$ est une chaîne homopolymère de 1,3-butadiène, d'isoprène ou de styrène ou une chaîne copolymère de monomères choisis parmi le 1,3-butadiène, l'isoprène et le styrène.

**5.** Système catalytique à base au moins :

- d'un métallocène de formule (IIIa) ou (IIIb), de préférence (IIIa)
- d'un composé diorganomagnésien à titre de co-catalyseur,

$\{P(Cp^1)(Cp^2)Y\}$ (IIIa)

$Cp^3Cp^4Y$ (IIIb)

Y désignant un groupe comportant un atome de métal qui est une terre rare, $Cp^1$, $Cp^2$, $Cp^3$ et $Cp^4$, identiques ou différents, étant choisis dans le groupe constitué par les groupes fluorényles, les groupes cyclopentadiényles et les groupes indényles, les groupes étant substitués ou non substitués,
P étant un groupe pontant les deux groupes $Cp^1$ et $Cp^2$, et comprenant un atome de silicium ou de carbone, le composé diorganomagnésien étant un composé diorganomagnésien asymétrique défini à l'une quelconque des revendications 1 à 4.

**6.** Système catalytique selon la revendication 5 dans lequel $Cp^1$ et $Cp^2$ sont identiques et sont choisis dans le groupe constitué par les groupes fluorényles substitués et le groupe fluorényle non substitué de formule $C_{13}H_8$.

**7.** Système catalytique selon l'une quelconque des revendications 5 à 6, dans lequel le symbole Y représente le groupe Met-G, avec Met désignant un atome de métal qui est une terre rare et G désignant un groupe comprenant le motif borohydrure $BH_4$ ou désignant un atome d'halogène choisi dans le groupe constitué par le chlore, le fluor, le brome et l'iode.

**8.** Système catalytique selon la revendication 7 dans lequel G désigne le chlore ou le groupe de formule (IV)

$(BH_4)_{(1+y)}$-$L_y$-$N_x$ (IV)

dans laquelle

L représente un métal alcalin choisi dans le groupe constitué par le lithium, le sodium et le potassium,
N représente une molécule d'un éther, de préférence diéthyléther ou tétrahydrofurane, x, nombre entier ou non, est égal ou supérieur à 0,
y, nombre entier, est égal ou supérieur à 0.

**9.** Système catalytique selon l'une quelconque des revendications 5 à 8 dans lequel la terre rare est un lanthanide dont le numéro atomique varie de 57 à 71, de préférence le néodyme.

**10.** Système catalytique selon l'une quelconque des revendications 5 à 9 dans lequel le pont P répond à la formule $ZR^1R^2$, Z représentant un atome de silicium ou de carbone, $R^1$ et $R^2$, identiques ou différents, représentant chacun un groupe alkyle comprenant de 1 à 20 atomes de carbone, de préférence un méthyle.

**11.** Système catalytique selon la revendication 10 dans lequel Z est Si.

**12.** Système catalytique selon l'une quelconque des revendications 5 à 11 dans lequel le métallocène est de formule (III-1), (III-2), (III-3), (III-4) ou (III-5) :

$[Me_2Si(Flu)_2Nd(\mu\text{-}BH_4)_2Li(THF)]$ (III-1)

$[\{Me_2SiFlu_2Nd(\mu\text{-}BH_4)_2Li(THF)\}_2]$ (III-2)

$[Me_2SiFlu_2Nd(\mu\text{-}BH_4)(THF)]$ (III-3)

$[\{Me_2SiFlu_2Nd(\mu\text{-}BH_4)(THF)\}_2]$ (III-4)

$[Me_2SiFlu_2Nd(\mu\text{-}BH_4)]$ (III-5)

Flu représentant le groupe $C_{13}H_8$.

**13.** Procédé de préparation d'un polymère qui comprend une étape de polymérisation d'un deuxième monomère choisi dans le groupe des monomères constitués par les diènes conjugués, l'éthylène, les $\alpha$-monooléfines et leurs mélanges en présence d'un système catalytique défini à l'une quelconque des revendications 5 à 12.

**14.** Procédé selon la revendication 13 dans lequel le deuxième monomère est l'éthylène ou un mélange d'un 1,3-diène et d'éthylène, le 1,3-diène étant de préférence le 1,3-butadiène, l'isoprène ou leur mélange.

**15.** Procédé de préparation d'un composé diorganomagnésien asymétrique défini à l'une quelconque des revendications 1 à 4 qui comprend :

- la mise en contact d'un polymère anionique vivant de formule $R^ALi$ avec un halogénure d'un organomagnésien de formule $R^B$-Mg-X,
- la réaction du polymère anionique vivant et de l'halogénure,

X étant un halogène choisi dans le groupe constitué par le chlore, le fluor, le brome et l'iode,
$R^A$ et $R^B$ étant définis selon l'une quelconque des revendications 1 à 4.

## Patentansprüche

**1.** Unsymmetrische Diorganomagnesiumverbindung der Formel (I)

$R^B$-Mg-$R^A$ (I)

wobei $R^A$ von $R^B$ verschieden ist,
$R^A$ für eine Polymerkette steht, die Einheiten eines ersten Monomers, das aus der Gruppe der Monomere bestehend aus 1,3-Dienen, aromatischen $\alpha$-Monolefinen und Mischungen davon ausgewählt ist, enthält,
wobei $R^B$ einen durch das Magnesiumatom substituierten Benzolkern umfasst, wobei eines der Kohlenstoffatome des Benzolkerns in ortho-Position zu dem Magnesium durch ein Methyl, ein Ethyl oder ein Isopropyl substituiert ist oder mit dem Kohlenstoffatom, das sein nächster Nachbar ist und das in meta-Position zu dem Magnesium steht, einen Ring bildet, wobei das andere Kohlenstoffatom des Benzolkerns in ortho-Position zu dem Magnesium durch ein Methyl, ein Ethyl oder ein Isopropyl substituiert ist, mit der Maßgabe, dass dann, wenn eines der 2 Kohlenstoffatome in ortho-Position durch ein Isopropyl substituiert ist, das zweite Kohlenstoffatom in ortho-Position nicht durch ein Isopropyl substituiert ist.

2. Unsymmetrische Diorganomagnesiumverbindung nach Anspruch 1, wobei die Diorganomagnesiumverbindung die Formel (II) aufweist:

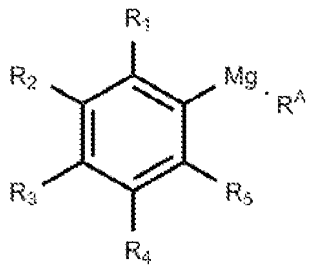

(II)

$R_1$ und $R_5$ gleich oder verschieden sind und für ein Methyl oder ein Ethyl, vorzugsweise ein Methyl, stehen,
wobei $R_2$, $R_3$ und $R_4$ gleich oder verschieden sind und für ein Wasserstoffatom oder ein Alkyl stehen,
wobei $R^A$ gemäß Anspruch 1 definiert ist.

3. Unsymmetrische Diorganomagnesiumverbindung nach einem der Ansprüche 1 bis 2, in der die Kohlenstoffatome des Benzolkerns in ortho-Position zu dem Magnesium durch ein Methyl oder ein Ethyl, vorzugsweise ein Methyl, substituiert sind.

4. Unsymmetrische Diorganomagnesiumverbindung nach einem der Ansprüche 1 bis 3, wobei $R^A$ für eine 1,3-Butadien-, Isopren- oder Styrol-Homopolymerkette oder eine Copolymerkette aus Monomeren, die aus 1,3-Butadien, Isopren und Styrol ausgewählt sind, steht.

5. Katalytisches System auf Basis von mindestens:

- einem Metallocen der Formel (IIIa) oder (IIIb), vorzugsweise (IIIa),
- einer Diorganomagnesiumverbindung als Cokatalysator,

$$\{P(Cp^1)(Cp^2)Y\} \qquad (IIIa)$$

$$Cp^3Cp^4Y \qquad (IIIb)$$

wobei Y für eine Gruppe steht, die ein Metallatom, bei dem es sich um ein Seltenerdmetall handelt, umfasst,
$Cp^1$, $Cp^2$, $Cp^3$ und $Cp^4$ gleich oder verschieden sind und aus der Gruppe bestehend aus Fluorenylgruppen, Cyclopentadienylgruppen und Indenylgruppen ausgewählt sind, wobei die Gruppen substituiert oder unsubstituiert sind,
wobei P für eine Gruppe steht, die die beiden Gruppen $Cp^1$ und $Cp^2$ verbrückt und ein Silicium- oder Kohlenstoffatom umfasst,
wobei es sich bei der Diorganomagnesiumverbindung um eine in einem der Ansprüche 1 bis 4 definierte unsymmetrische Diorganomagnesiumverbindung handelt.

6. Katalytisches System nach Anspruch 5, wobei $Cp^1$ und $Cp^2$ gleich sind und aus der Gruppe bestehend aus

substituierten Fluorenylgruppen und der unsubstituierten Fluorenylgruppe der Formel $C_{13}H_8$ ausgewählt sind.

**7.** Katalytisches System nach einem der Ansprüche 5 bis 6, wobei das Symbol Y für die Gruppe Met-G steht, wobei Met für ein Metallatom, bei dem es sich um ein Seltenerdmetall handelt, steht und G für eine Gruppe, die die Borhydrid-Einheit $BH_4$ umfasst, oder ein Halogenatom, das aus der Gruppe bestehend aus Chlor, Fluor, Brom und Iod ausgewählt ist, steht.

**8.** Katalytisches System nach Anspruch 7, wobei G für Chlor oder die Gruppe der Formel (IV) steht:

$$(BH_4)_{(1+y)}\text{-}L_y\text{-}N_x \qquad \text{(IV)}$$

in der

L für ein Alkalimetall, das aus der Gruppe bestehend aus Lithium, Natrium und Kalium ausgewählt ist, steht,
N für ein Molekül eines Ethers, vorzugsweise Diethylether oder Tetrahydrofuran, steht,
x ganzzahlig oder nicht ganzzahlig ist und gleich oder größer als 0 ist,
y ganzzahlig ist und gleich oder größer als 0 ist.

**9.** Katalytisches System nach einem der Ansprüche 5 bis 8, wobei es sich bei dem Seltenerdmetall um ein Lanthanid mit einer Ordnungszahl von 57 bis 71, vorzugsweise Neodym, handelt.

**10.** Katalytisches System nach einem der Ansprüche 5 bis 9, wobei die Brücke P der Formel $ZR^1R^2$ entspricht, wobei Z für ein Silicium- oder Kohlenstoffatom steht und $R^1$ und $R^2$ gleich oder verschieden sind und jeweils für eine Alkylgruppe mit 1 bis 20 Kohlenstoffatomen, vorzugsweise ein Methyl, stehen.

**11.** Katalytisches System nach Anspruch 10, wobei Z für Si steht.

**12.** Katalytisches System nach einem der Ansprüche 5 bis 11, wobei das Metallocen der Formel (III-1), (III-2), (III-3), (III-4) oder (III-5) entspricht:

$$[Me_2Si(Flu)_2Nd(p\text{-}BH_4)_2Li(THF)] \qquad \text{(III-1)}$$

$$[\{Me_2SiFlu_2Nd(\mu\text{-}BH_4)_2Li(THF)\}_2] \qquad \text{(III-2)}$$

$$[Me_2SiFlu_2Nd(\mu\text{-}BH_4)(THF)] \qquad \text{(III-3)}$$

$$[\{Me_2SiFlu_2Nd(\mu\text{-}BH_4)(THF)\}_2] \qquad \text{(III-4)}$$

$$[Me_2SiFlu_2Nd(\mu\text{-}BH_4)] \qquad \text{(III-5)}$$

wobei Flu für die Gruppe $C_{13}H_8$ steht.

**13.** Verfahren zur Herstellung eines Polymers, das einen Schritt der Polymerisation eines zweiten Monomers, das aus der Gruppe von Monomeren bestehend aus konjugierten Dienen, Ethylen, $\alpha$-Monoolefinen und Mischungen davon ausgewählt wird, in Gegenwart eines in einem der Ansprüche 5 bis 12 definierten Katalysatorsystems umfasst.

**14.** Verfahren nach Anspruch 13, wobei es sich bei dem zweiten Monomer um Ethylen oder eine Mischung von einem 1,3-Dien und Ethylen handelt, wobei es sich bei dem 1,3-Dien vorzugsweise um 1,3-Butadien, Isopren oder eine Mischung davon handelt.

**15.** Verfahren zur Herstellung einer in einem der Ansprüche 1 bis 4 definierten unsymmetrischen Diorganomagnesiumverbindung, das Folgendes umfasst:

- das Inkontaktbringen eines lebenden anionischen Polymers der Formel $R^ALi$ mit einem Organomagnesiumhalogenid der Formel $R^B$-Mg-X,
- das Umsetzen des lebenden anionischen Polymers und des Halogenids,

wobei X für ein Halogen steht, das aus der Gruppe bestehend aus Chlor, Fluor, Brom und Iod ausgewählt ist, wobei $R^A$

und $R^B$ gemäß einem der Ansprüche 1 bis 4 definiert sind.

## Claims

**1.** Asymmetric diorganomagnesium compound of formula (I)

$$R^B\text{-Mg-}R^A \qquad (I)$$

$R^A$ being different from $R^B$,
$R^A$ being a polymer chain containing units of a first monomer chosen from the group of monomers consisting of 1,3-dienes, aromatic $\alpha$-monoolefins and mixtures thereof,
$R^B$ comprising a benzene nucleus substituted with a magnesium atom, one of the carbon atoms of the benzene nucleus ortho to the magnesium being substituted with a methyl, an ethyl, an isopropyl or forming a ring with the carbon atom which is its closest neighbour and which is meta to the magnesium, the other carbon atom of the benzene nucleus ortho to the magnesium being substituted with a methyl, an ethyl or an isopropyl, on condition that if one of the two ortho carbon atoms is substituted with an isopropyl, the second ortho carbon atom is not substituted with an isopropyl.

**2.** Asymmetric diorganomagnesium compound according to Claim 1, in which the diorganomagnesium compound is of formula (II)

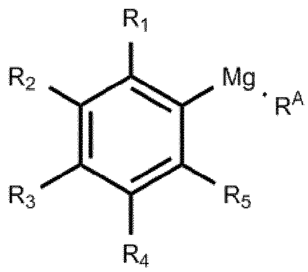

(II)

$R_1$ and $R_5$, which may be identical or different, represent a methyl or an ethyl, preferably a methyl,
$R_2$, $R_3$ and $R_4$, which may be identical or different, being a hydrogen atom or an alkyl,
$R^A$ being defined according to Claim 1.

**3.** Asymmetric diorganomagnesium compound according to either of Claims 1 and 2, in which the carbon atoms of the benzene nucleus ortho to the magnesium are substituted with a methyl or an ethyl, preferably a methyl.

**4.** Asymmetric diorganomagnesium compound according to any one of Claims 1 to 3, in which $R^A$ is a 1,3-butadiene, isoprene or styrene homopolymer chain or a copolymer chain of monomers chosen from 1,3-butadiene, isoprene and styrene.

**5.** Catalytic system based at least:

- on a metallocene of formula (IIIa) or (IIIb), preferably (IIIa),
- on a diorganomagnesium compound as cocatalyst,

$$\{P(Cp^1)(Cp^2)Y\} \qquad (IIIa)$$

$$Cp^3Cp^4Y \qquad (IIIb)$$

Y denoting a group including a metal atom which is a rare-earth metal,
$Cp^1$, $Cp^2$, $Cp^3$ and $Cp^4$, which may be identical or different, being chosen from the group consisting of fluorenyl groups, cyclopentadienyl groups and indenyl groups, the groups being substituted or unsubstituted,
P being a group bridging the two groups $Cp^1$ and $Cp^2$ and comprising a silicon or carbon atom,

the diorganomagnesium compound being an asymmetric diorganomagnesium compound defined in any one of Claims 1 to 4.

**6.** Catalytic system according to Claim 5, in which $Cp^1$ and $Cp^2$ are identical and are chosen from the group consisting of substituted fluorenyl groups and the unsubstituted fluorenyl group of formula $C_{13}H_8$.

**7.** Catalytic system according to either of Claims 5 and 6, in which the symbol Y represents the group Met-G, with Met denoting a metal atom which is a rare-earth metal and G denoting a group comprising the borohydride $BH_4$ unit or denoting a halogen atom chosen from the group consisting of chlorine, fluorine, bromine and iodine.

**8.** Catalytic system according to Claim 7, in which G denotes chlorine or the group of formula (IV)

$$(BH_4)_{(1+y)}\text{-}L_y\text{-}N_x \qquad \text{(IV)}$$

in which

L represents an alkali metal chosen from the group consisting of lithium, sodium and potassium,
N represents a molecule of an ether, preferably diethyl ether or tetrahydrofuran,
x, which may or may not be an integer, is greater than or equal to 0,
y, which is an integer, is greater than or equal to 0.

**9.** Catalytic system according to any one of Claims 5 to 8, in which the rare-earth metal is a lanthanide, the atomic number of which ranges from 57 to 71, preferably neodymium.

**10.** Catalytic system according to any one of Claims 5 to 9, in which the bridge P corresponds to the formula $ZR^1R^2$, Z representing a silicon or carbon atom and $R^1$ and $R^2$, which may be identical or different, each representing an alkyl group comprising from 1 to 20 carbon atoms, preferably a methyl.

**11.** Catalytic system according to Claim 10, in which Z is Si.

**12.** Catalytic system according to any one of Claims 5 to 11, in which the metallocene is of formula (III-1), (III-2), (III-3), (III-4) or (III-5):

$$[Me_2Si(Flu)_2Nd(\mu\text{-}BH_4)_2Li(THF)] \qquad \text{(III-1)}$$

$$[\{Me_2SiFlu_2Nd(\mu\text{-}BH_4)_2Li(THF)\}_2] \qquad \text{(III-2)}$$

$$[Me_2SiFlu_2Nd(\mu\text{-}BH_4)(THF)] \qquad \text{(III-3)}$$

$$[\{Me_2SiFlu_2Nd(\mu\text{-}BH_4)(THF)\}_2] \qquad \text{(III-4)}$$

$$[Me_2SiFlu_2Nd(\mu\text{-}BH_4)] \qquad \text{(III-5)}$$

Flu representing the $C_{13}H_8$ group.

**13.** Process for preparing a polymer, which comprises a step of polymerization of a second monomer chosen from the group of monomers consisting of conjugated dienes, ethylene, $\alpha$-monoolefins and mixtures thereof in the presence of a catalytic system defined in any one of Claims 5 to 12.

**14.** Process according to Claim 13, in which the second monomer is ethylene or a mixture of a 1,3-diene and of ethylene, the 1,3-diene preferably being 1,3-butadiene, isoprene or a mixture thereof.

**15.** Process for preparing an asymmetric diorganomagnesium compound defined in any one of Claims 1 to 4, which comprises:

- the placing in contact of a living anionic polymer of formula $R^ALi$ with an organomagnesium halide of formula $R^B$-Mg-X,
- the reaction of the living anionic polymer and of the halide,

X being a halogen chosen from the group consisting of chlorine, fluorine, bromine and iodine, $R^A$ and $R^B$ being defined according to any one of Claims 1 to 4.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1092731 A
- WO 2004035639 A
- WO 2007054224 A
- WO 2018224776 A
- WO 2019077232 A
- EP 1092731 A1
- WO 2004035639 A1
- WO 2005028526 A1
- WO 2007045223 A2
- WO 2007045224 A2
- WO 2007054223 A